# EUROPEAN PATENT SPECIFICATION

(11) **EP 2 228 292 B1**
(45) Date of publication and mention of the grant of the patent: **18.04.2012**
(21) Application number: 09100182.6
(22) Date of filing: 13.03.2009
(51) Int. Cl.: B62M 3/08

(54) **Quick release device**
Schnelltrennvorrichtung
Dispositif de libération rapide

(43) Date of publication of application: 15.09.2010
(73) Proprietor: Chen, Chung-I, Taichia, 43713 Taichung Hsien (TW)
(72) Inventor: Chen, Chung-I, Taichia, 43713 Taichung Hsien (TW)
(74) Representative: Hellmich, Wolfgang

(56) References cited:
- FR-A- 2 684 635
- GB-A- 2 385 837
- JP-A- 2008 055 935
- US-A- 5 586 472
- US-A1- 2003 041 689

## Description

The present invention relates to a quick release device, and more particularly to a quick release device for a bicycle crank and a bicycle pedal. A quick release of the preamble part of claim 1 is known from US 5,586,472.

US 5,586,472 discloses a detachable bicycle pedal mounting structure which is comprised of a crank, a pedal, and a connector connected between the pedal and the crank. The crank has a screw hole at one end for coupling the connector. The connector comprises a screw rod at one end threaded into the screw hole of the crank, an axial hexagonal coupling hole at an opposite, and a radial stepped hole perpendicularly connected to the hexagonal coupling hole. The pedal has a hexagonal spindle inserted into the hexagonal coupling hole of the connector. A locating bolt is inserted through the stepped hole into a locating hole on the hexagonal spindle of the pedal to hold the pedal and the connector together. The bolt is pressed by a spring into the locating hole. Through the finger rod, the locating bolt can be pulled upwards from the locating bole of the hexagonal spindle of the pedal, for permitting the pedal to the disconnected from the connector.

The main objective of the present invention is to provide an improved quick release device which permits user to assemble/disassemble the crank and pedal easily.

Further benefits and advantages of the present invention will become apparent after a careful reading of the detailed description with appropriate reference to the accompanying drawings.

In the drawings:
Fig. 1 is an exploded perspective view of a quick release device in accordance with the present invention;
Fig. 2 is an assembled perspective view of the quick release device in accordance with the present invention;
Fig. 3 is a partial cross-sectional side plane view of the quick release device in accordance with the present invention;
Fig. 4 shows the disassembling operation of the quick release device in accordance with the present invention;
Fig. 5 shows the assembling operation of the quick release device in accordance with the present invention; and
Fig. 6 is a partial cross-sectional top plan view of a second embodiment of a quick release device in accordance with the present invention.

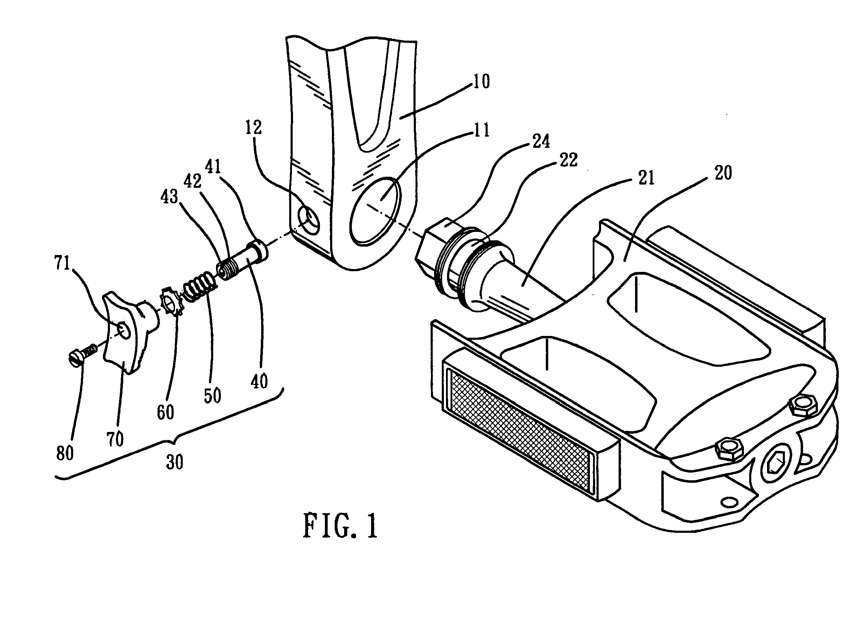

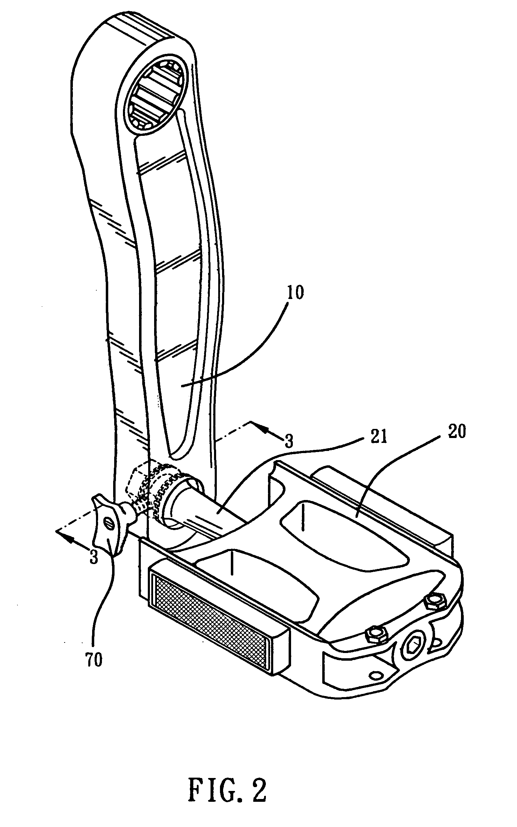

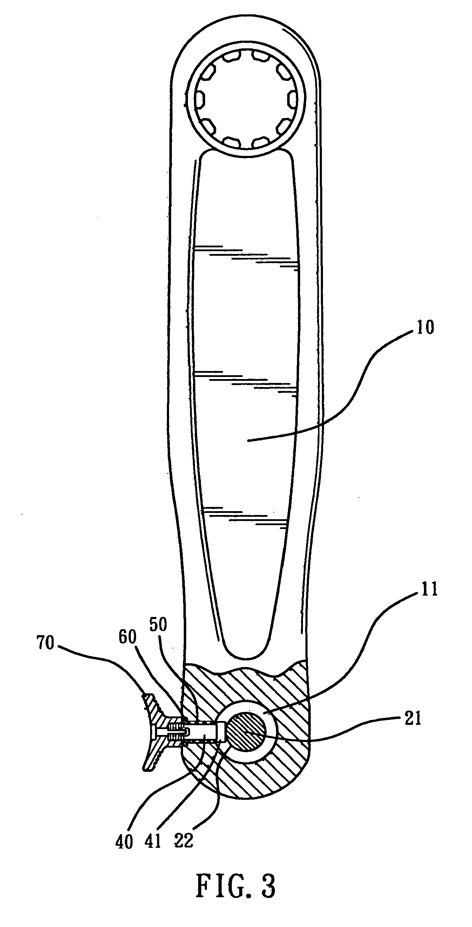

Referring to the drawings and initially to Figs. 1-4, a quick release device in accordance with the present invention comprises a crank 10 and a pedal 20 connected to the crank 10.

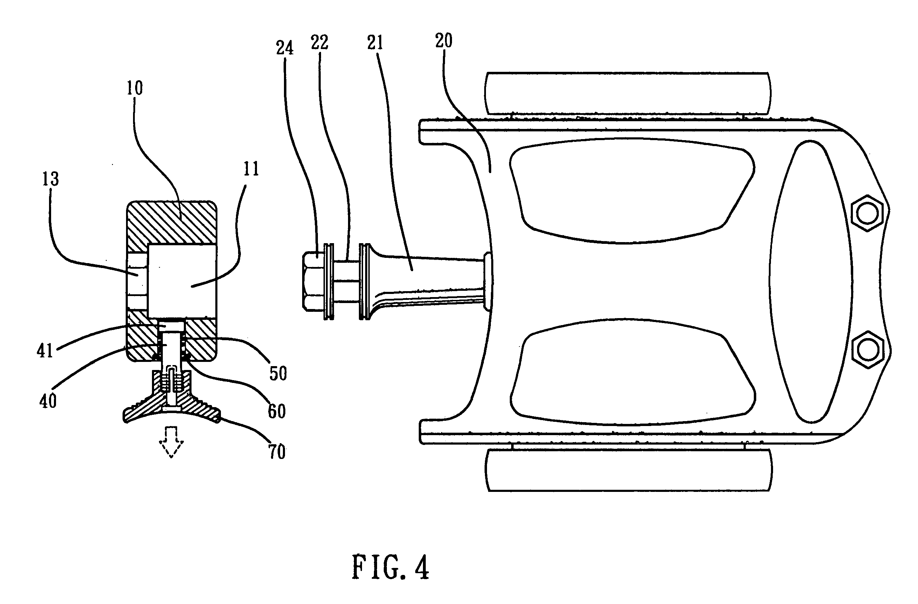

The crank 10 has a pedal hole 11 defined in one end thereof. The cranks 10 has a quick release hole 12 defined in a lateral thereof. The quick release hole 12 is communicated with the pedal hole 11 and perpendicular to the pedal hole 11. The crank 10 has an engaging hole 13 (see Fig. 4) defined therein and communicated with the pedal hole 11. The engaging hole 13 is in a shape of hexagon.

The pedal 20 includes a pedal spindle 21. The pedal spindle 21 is inserted into the pedal hole 11. The pedal spindle 21 has an annular groove 22 defined therein and corresponding to the quick release hole 12. The pedal spindle 21 has an engaging protrusion 24 formed in one end thereof and corresponding to the engaging hole 13. The engaging protrusion 24 is in a shape of hexagon. In other embodiment, the engaging protrusion 24 is in a shape of polygon. When the engaging protrusion 24 engages with the engaging hole 13, the pedaling force transmits from pedal 20 to the crank 10.

The quick release device in accordance with the present invention further comprises a quick release assembly 30 partially received in the quick release hole 12. The quick release assembly 30 includes a rod 40, a spring 50, a stopper 60, a pull button 70, and a screw 80. The rod 40 is received in the quick release hole 12. The rod 40 has a head 41 formed in one end thereof and a threaded portion 42 formed on the other end thereof. A diameter of the head 41 is greater than that of the rod 40. The head 41 is selectively protruded into the pedal hole 11. The threaded portion 42 has a split 43 defined therein. The stopper 60 is a star-shaped washer. The stopper 60 is fixedly mounted in the quick release hole 12. The pull button 70 has a through hole 71 defined therein.

When assembling, the head 41 of the rod 40 is inserted into the quick release hole 12. The spring 50 and the stopper 60 are sequentially sleeved on the rod 40. The stopper 60 is pressed in the quick release hole 12 such that one end of the spring 50 is abutted against the head 41 and the other end of the spring 50 is abutted against the stopper 60. The threaded portion 42 of rod 40 passes through the stopper 60 and threadedly connects to the pull button 70. The screw 80 passes through the through hole 71 and threadedly connects to the rod 40. The split 43 is provided to enlarge the threaded portion 42 such that the rod 40 and the pull button 70 are firmly connected to each other. The head 41 is subjected the force provided by the spring 50 to protrude into the pedal hole 11.

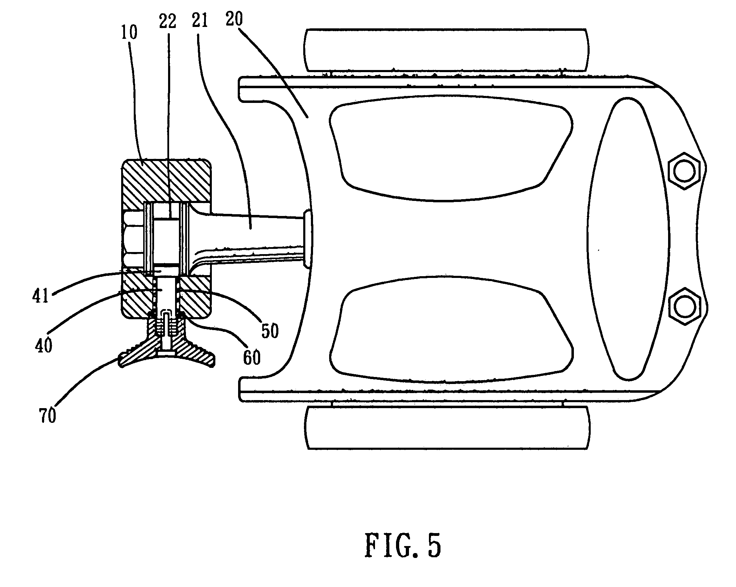

Referring to Figs. 4 and 5, the assembling/disassembling operation of the quick release device in accordance with the present invention is illustrated. When pulling the pull button 70, the head 41 retracts into the quick release hole 12. The pedal 20 is pulled out from the pedal hole 11 as shown in Fig. 4 to disassemble the crank 10 and the pedal 20. When pulling the pull button 70 and inserting the pedal 20 into the pedal hole 11, the engaging protrusion 24 engages with the engaging hole 13. After releasing the pull button 70, the head 41 annular groove 22protrudes into the pedal hole 11 such that the head 41 engages with the annular groove 22. The head 41 is subjected the force provided by the spring 50 to firmly connect the crank 10 and the pedal 20.

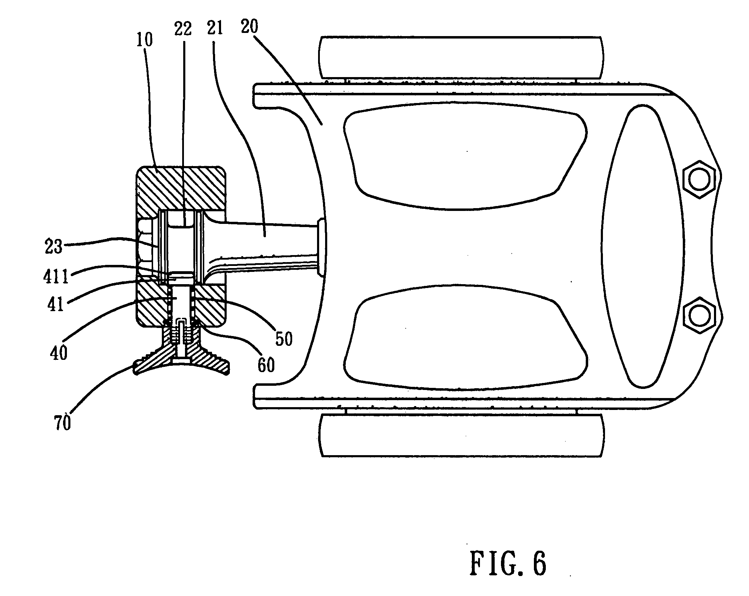

Referring to Fig. 6, a second embodiment of a quick release device in accordance with the present invention is illustrated. The elements and the efforts which are the same with the first embodiment are not described, only the differences are described. The pedal 20 has a first guiding face 23 formed therein. The first guiding face 23 is disposed between the annular groove 22 and engaging protrusion 24. The head 41 has a second guiding face 411 formed in a free end thereof. When the pedal 20 is inserted into the pedal hole 11, the first guiding face 23 abuts against the second guiding face 24 such that the head 41 is pushed to retract. When the annular groove 22 is corresponding to the head 41, the head 41 engages with the annular groove 22. Therefore, user does not need to pull the pull button 70.

## Claims

1. A quick release device comprising:
a crank (10) having a pedal hole (11) defined therein, the crank (10) having a quick release hole (12) defined in a lateral thereof, the quick release hole communicated with the pedal hole;
a pedal (20) partially received in the pedal hole (11), the pedal (20) having a pedal spindle (21),
a quick release assembly (30) partially received in the quick release hole (12), the quick release assembly comprising:
a rod (40) received in the quick release hole (12), the rod having an enlarged head (41) formed in one end thereof;
a spring (50) sleeved on the rod;
a stopper (60) mounted in the quick release hole (12), wherein one end of the spring (50) is abutted against the enlarged head (41) and the other end of the spring is abutted against the stopper (60) such that the enlarged head (41) protrudes into the pedal hole; wherein the rod passes through the stopper (60); and
a pull button (70) connected to the rod (40), wherein when pulling the pull button, the enlarged head retracts into the quick release hole;
**characterized in that**
the pedal spindle (21) has a first guiding face (23) formed therein;
the enlarged head has a second guiding face (411) formed in a free end thereof.

2. The quick release device as claimed in claim 1, wherein the crank has an engaging hole (13) defined therein and communicated with the pedal hole (11).

3. The quick release device as claimed in claim 2, the pedal spindle (21) having an engaging protrusion (24) formed in one end thereof and an annular groove (22) defined therein, the engaging protrusion (24) corresponding to the engaging hole (13), the annular groove (22) corresponding to the quick release hole (12).

4. The quick release device as claimed in one of the claims above, wherein the stopper (60) is a star-shaped washer.

5. The quick release device as claimed in one of the claims above, wherein the rod (40) has a threaded portion formed in one end thereof for connecting the pull button.

6. The quick release device as claimed in one of the claims above, wherein the quick release hole (12) is perpendicular to the pedal hole (11).

## Patentansprüche

1. Eine Schnellauslösevorrichtung, aufweisend:
Einer Kurbel (10) mit einem darin gebildeten Pedalloch (11), wobei die Kurbel (10) mit einem Schnellauslöseloch (12) auf der Seite versehen ist, das mit dem Pedalloch (11) gebildet ist;
einem Pedal (20), das teilweise im Pedalloch (11) aufgenommen und mit einer Pedalspindel (21) gebildet ist;
einem Schnellauslösemechanismus (30), der teilweise im Schnellauslöseloch (12) aufgenommen und aus den folgenden Elementen aufgebaut ist:
einem Bolzen (40), der im Schnellauslöseloch (12) aufgenommen und an einem Ende mit einem vergrößerten Kopfteil (41) gebildet ist;
einer auf dem Bolzen (40) angebrachten Feder (50);
einem Stopfen (60), der im Schnellauslöseloch (12) befestigt ist, wobei ein Ende der Feder (50) an das vergrößerte Kopfteil (41), während das andere Ende der Feder (50) an den Stopfen (60) angedrückt ist, so dass das vergrößerte Kopfteil (41) in das Pedalloch (11) ragt; wobei der Bolzen (40) durch den Stopfen (60) ragt; und
einem Ziehknopf (70), der am Bolzen (40) befestigt ist, wobei beim Ziehen an diesem Ziehknopf (70) das vergrößerte Kopfteil (41) in das Schnellauslöseloch (12) eingezogen wird;
**dadurch gekennzeichnet, dass**
die Pedalspindel (21) inwendig mit einer Leitfläche (23) gebildet ist und das vergrößerte Kopfteil (41) an einem freien Ende ebenfalls eine Leitfläche (411) aufweist.

2. Die Schnellauslösevorrichtung nach Anspruch 1, **dadurch gekennzeichnet, dass** die Kurbel (10) inwendig mit einem Einrastloch (13) versehen ist, das mit dem Pedalloch (11) verbunden ist.

3. Die Schnellauslösevorrichtung nach Anspruch 2, **dadurch gekennzeichnet, dass** die Pedalspindel (21) in einem Ende einen Vorsprung (24) zum Einrasten aufweist und inwendig darin eine umlaufende Rille (22) gebildet ist; dieser Vorsprung (24) zum Einrasten mit dem Einrastloch (13) und die umlaufende Rille (22) mit dem Schnellauslöseloch (12) übereinstimmt.

4. Die Schnellauslösevorrichtung nach einer der oben genannten Ansprüche, **dadurch gekennzeichnet, dass** der Stopfen (60) als eine sternförmige Unterlegscheibe gebildet ist.

5. Die Schnellauslösevorrichtung nach einer der oben genannten Ansprüche, **dadurch gekennzeichnet, dass** der Bolzen (40) zum Befestigen des Ziehknopfes (70) an einem Ende mit einem Gewinde versehen ist.

6. Die Schnellauslösevorrichtung nach einer der oben genannten Ansprüche, **dadurch gekennzeichnet, dass** das Schnellauslöseloch (12) senkrecht zum Pedalloch (11) gebildet ist.

## Revendications

1. Un dispositif de démontage rapide comprenant :
une manivelle (10) ayant un trou de pédale (11) défini dans celle-ci, la manivelle (10) ayant un trou de libération rapide (12) défini sur un côté dudit trou de pédale, le trou de libération rapide communiquant avec le trou de pédale ;
une pédale (20) partiellement reçue dans le trou de pédale (11), la pédale (20) ayant un axe pédale (21),
un assemblage à démontage rapide (30) partiellement reçu dans le trou de libération rapide (12), l'assemblage à démontage rapide comprenant :
un axe (40) reçu dans le trou de libération rapide (12), l'axe ayant une tête élargie (41) formée dans une extrémité dudit axe ;
un ressort (50) emmanché sur l'axe;
une pièce d'arrêt (60) montée dans le trou de libération rapide (12), dans lequel une extrémité du ressort (50) bute contre la tête élargie (41) et l'autre extrémité du ressort bute contre la pièce d'arrêt (60) de sorte que la tête élargie (41) pénètre dans le trou de pédale; dans lequel l'axe passe au travers de la pièce d'arrêt (60); et
un bouton tirette (70) connecté à l'axe (40), où quand on tire sur le bouton tirette, la tête élargie se loge dans le trou de libération rapide;
**caractérisé en ce que**
l'axe de pédale (21) a une première surface de guidage (23) formée dans ledit axe;
la tête élargie a une seconde surface de guidage (411) formée dans une extrémité de celui-ci.

2. Le dispositif de démontage rapide tel que revendiqué dans la revendication 1, où la manivelle a un trou d'engagement (13) défini dans ladite manivelle et communiquant avec le trou de pédale (11).

3. Le dispositif de démontage rapide tel que revendiqué dans la revendication 2, l'axe de pédale (21) ayant une saillie d'engagement (24) formée dans une extrémité de celui-ci et une rainure annulaire (22) définie là, la saillie d'engagement (24) correspondant au trou d'engagement (13), la rainure annulaire (22) correspondant au trou de libération rapide (12).

4. Le dispositif de démontage rapide tel que revendiqué dans l'une des revendications ci-dessus, où la pièce d'arrêt (60) est une rondelle en forme d'étoile.

5. Le dispositif de démontage rapide tel que revendiqué dans l'une des revendications ci-dessus, où l'axe (40) a une partie filetée formée dans une extrémité de celui-ci pour connecter le bouton tirette.

6. Le dispositif de démontage rapide tel que revendiqué dans l'une des revendications ci-dessus, où le trou de libération rapide (12) est perpendiculaire au trou de pédale (11).
